# EUROPÄISCHE PATENTANMELDUNG

(11) **EP 4 289 980 A1**
(43) Veröffentlichungstag der Anmeldung: **13.12.2023**
(21) Anmeldenummer: 22178004.2
(22) Anmeldetag: 09.06.2022
(51) Int. Cl.: C22C 9/04, C22F 1/08, F16C 33/04

(54) **MESSINGLEGIERUNGSPRODUKT SOWIE VERFAHREN ZUM HERSTELLEN EINES SOLCHEN MESSINGLEGIERUNGSPRODUKTES**

(71) Anmelder: Otto Fuchs - Kommanditgesellschaft -, 58540 Meinerzhagen (DE)
(72) Erfinder: REETZ, Björn, 47800 Krefeld (DE); MÜNCH, Tileman, 41751 Viersen (DE); PLETT, Thomas, 57392 Schmallenberg (DE)
(74) Vertreter: Haverkamp Patentanwälte PartG mbB

(57) **Zusammenfassung**

Beschrieben ist ein warmgeformtes und anschließend zum Ausbilden von in der Matrix fein verteilten, Phosphor enthaltenden Nanoausscheidungen (P-Ausscheidungen) ausscheidungsgeglühtes Messinglegierungsprodukt für Gleit- oder Reibanwendungen in einer Ölumgebung mit folgender Zusammensetzung (Angaben in Gew.-%):
Cu 61,5 - 66 %,
Mn 1,7 -2,3 %,
Ni 4,6 - 5,3 %,
AI 1,65 - 2,25 %,
Si 1,8 - 2,6 %,
Fe 0,17 - 0,5 %,
P 0,01 - 0,1 %,
Sn max. 0,35 %,
Co max. 0,2 %,
Cr max. 0,2 %,
Pb max. 0,1 %
Ti max. 0,2 %,
B max. 0,005 %,
Zn Rest sowie
unvermeidbare Verunreinigungen mit max. 0,05 % je Element, wobei die Summe der unvermeidbaren Verunreinigungen insgesamt 0,15 % nicht überschreitet.

Beschrieben ist des Weiteren ein Verfahren zum Herstellen eines solchen Messinglegierungsproduktes.

## Beschreibung

Die Erfindung betrifft ein Messinglegierungsprodukt, insbesondere ein warmgeformtes und anschließend warm ausgelagertes Messinglegierungsprodukt für Gleit- oder Reibanwendungen in einer Ölumgebung.

Es gibt zahlreiche Anwendungsfälle, in denen Messinglegierungsprodukte, hergestellt aus einer Sondermessinglegierung, für Gleitanwendungen in einer Ölumgebung eingesetzt werden. Hierbei handelt es sich beispielsweise um Synchronringe, Lagerbuchsen, etwa solche, die zur Lagerung von Turboladerrädern eingesetzt werden. Ausgelegt werden die für derartige Anwendungen eingesetzten Messinglegierungsprodukte, damit diese der Gleit- oder Reibbeanspruchung bei einem Normalbetrieb standhalten und üblicherweise auch gewisse Notlaufeigenschaften aufweisen. Notlaufeigenschaften werden gewünscht, damit eine hinreichende Standzeit auch unter Trockenreibungsbedingungen sichergestellt werden kann. Durch die Reibleistung und den Ölkontakt entsteht auf der Lager- bzw. Reibfläche eines solchen Messinglegierungsproduktes, beispielsweise einer Buchse, eine tribologische Schicht (eine sogenannte Tribo-Schicht) mit angelagerten Schmiermittelkomponenten. Üblicherweise wird eine gleichmäßige und zugleich hohe Anlagerungsrate der Schmiermittelbestandteile und deren Abbauprodukte gefordert, um an der Gleitschicht eine Tribo-Schicht mit hinreichender Stabilität zu erhalten. Neben den an eine Gleitung bzw. Reibung gestellten Anforderungen werden an ein solches Messinglegierungsprodukt typischerweise auch hohe mechanische Festigkeitswerte gefordert, beispielsweise eine ausreichend hohe 0,2 %-Dehngrenze, um die unter Last auftretenden plastischen Verformungen möglichst gering zu halten. Auch sind entsprechend hohe Zugfestigkeitswerte gefordert.

Aus WO 2015/173291 A2 ist eine Sondermessinglegierung für Reibbelastungen bekannt. Diese vorbekannte Legierung enthält folgende Bestandteile (Angaben in Gew.-%):
Cu 58 - 66 %,
Mn 1,6 - 7 %,
Ni 0,2 - 6 %,
Al 0,2 - 5,1 %,
Si 0,1 - 3 %,
Fe max. 1,5 %,
Sn max. 0,5 %,
Pb max. 0,5 %,
Rest Zn nebst unvermeidbaren Verunreinigungen.

Diese Legierung stellt die generische Legierung zu den in diesem Stand der Technik beschriebenen Spezial-Sondermessinglegierungen dar. Diese unterscheiden sich in ihrer speziellen Zusammensetzung der vorstehend genannten Legierungselemente. Eine dieser Spezial-Sondermessinglegierungen zeichnet sich durch ein gut einstellbares Reibverschleißverhalten aus. In Abhängigkeit der an das Messinglegierungsprodukt gestellten statischen und dynamischen Reibbelastungen, der Wahl des Schmiermittels und der Materialeigenschaften der Gegenreibfläche kann der Reibverschleiß an den jeweils vorgesehenen Anwendungsfall angepasst werden, da die Phasenanteile für die α-Phase und die β-Phase der Legierungsmatrix in einem weiten Intervall einstellbar sind. Berücksichtigt wird hierbei, dass der β-Phasenanteil eine höhere Härte und Abriebfestigkeit aufweist als der α-Phasenanteil. Diese Legierung weist im Strangpresszustand, d.h.: Unmittelbar nach dem Strangpressen, einen überwiegenden α-Phasenanteil auf, ist mithin α-Phasen-dominant. Infolgedessen eignet sich diese Legierung für einen Schritt des Kaltumformens, beispielsweise einem Ziehen nach dem Strangpressen, ohne dass zuvor das stranggepresste Produkt zwischengeglüht werden müsste. Bei dieser Legierung dient der dominante α-Phasenanteil auch, um einen hinreichend hohen Relaxationswiderstand beim Anlassen der Legierung nach einem Ziehen zu erhalten. Diese Spezial-Sondermessinglegierung weist in ihrer bevorzugten Ausgestaltung folgende Legierungszusammensetzung auf (Angaben in Gew.-%):
Cu 63 - 65 %,
Mn 1,8 - 2,2 %,
Ni 4,8 - 5,2 %,
Al 1,9 - 2,1 %,
Si 2,0 - 2,5 %,
Fe 0,2 - 0,4 %,
Sn max. 0,1 %,
Pb max. 0,1 %,
Rest Zn nebst unvermeidbaren Verunreinigungen.

In EP 3 992 320 A1 ist eine bleifreie Cu-Zn-Legierung mit gegenüber der Legierung CuZn42 verbesserten Zerspanungseigenschaften beschrieben. Diese vorbekannte Legierung weist folgende Zusammensetzung auf (Angaben in Gew.-%):
Cu 57 - 59,5 %,
Fe 0,12 - 0,17 % (1. Alternative),
   oder
Fe max. 0,06 % und Mn 0,3 - 0,7 % (2. Alternative),
P 0,03 - 0,1 %,
Sn max. 1,0 %,
Rest Zn nebst unvermeidbaren Verunreinigungen.

Eine Cu-Zn-Basislegierung mit guten Zerspanungseigenschaften ist aus EP 3 992 317 A1 bekannt. Als spanbruchbegünstigendes Element in der Legierungszusammensetzung wird das Element P eingesetzt, und zwar mit Anteilen zwischen 0,03 und 0,01 Gew.-%. Zusammen mit P oder auch alternativ kann auch Sn als spanbruchbegünstigendes Element verwendet werden. Im Übrigen umfasst diese Legierung folgende Bestandteile (Angaben in Gew.-%):
Cu 58 - 64 %
Fe 0,4 - 1,4 %
Mn 0,4 - 2,3 %
Ni 1,5 - 3,5 %
Al 0,1 - 4,4 %
Si 0,5 - 1,8 %,
Rest Zn nebst unvermeidbaren Verunreinigungen.

Bei dieser vorbekannten Sondermessinglegierung wird P zur Ausbildung von Phosphiden im Zusammenhang mit dem Legierungsguss eingesetzt. In Abhängigkeit von der gewählten Alternative bilden sich Eisenphosphide oder Manganphosphide. Die Beimengung von P wirkt beim Guss der Legierung kornfeinend, was sich positiv auf die mit dieser Legierung gewünschte verbesserte Zerspanung auswirkt. Zusätzlich wirken die verteilt in der Matrix enthaltenden Phosphide selbst spanbrechend. Die Korngröße der beim Guss entstehenden Phosphide liegt im Bereich von einigen 10'er bis über 100 µm. In diesem Stand der Technik wird hervorgehoben, dass die verbesserten Zerspanungseigenschaften sich ohne zusätzliche Verfahrensschritte einstellen, d.h.: Bereits beim Guss.

Auch wenn die beispielhaft zum Stand der Technik vorstehend angesprochenen Messinglegierungen bzw. Messinglegierungsprodukte den an sie gestellten Anforderungen im Grunde genügen, kann ebenso wie bei anderen Sondermessinglegierungen dieser Art nicht ausgeschlossen werden, dass bei außergewöhnlichen Belastungen der Gleit- oder Reibfläche sich die Gleit- bzw. Reibpartner aneinander festfressen. Verantwortlich hierfür sind besondere Belastungen der Gleit- bzw. Reibpartner, die quer zur Rotations- bzw. Lagerachse auf die Gleit- bzw. Reibpartner einwirken. Diese bei einem normalen Betrieb nicht auftretenden Kräfte können, wenn in entsprechender Höhe und über eine gewisse Zeitdauer anhaltend, zu einer Adhäsion und einem Kaltverschweißen der beiden Gleit- oder Reibpartner führen. Ein solches belastungsabhängiges Festfressen ist einer von mehreren Mechanismen, die zur Beschädigung und Unbrauchbarkeit des Messinglegierungsproduktes neben Abrasion, Ermüdung und Korrosion führen.

Während die eingangs diskutierten Sondermessinglegierungen in Bezug auf Abrasion, Ermüdung und Korrosion in einer Ölumgebung eine hinreichende Standfestigkeit aufweisen, wäre es wünschenswert, wenn die Gefahr eines belastungsabhängigen Festfressens verringert bzw. die zum Hervorrufen eines Festfressens erforderliche Kraft (Fresslast) erhöht wäre. Der Erfindung liegt daher die Aufgabe zugrunde, ein solches Messinglegierungsprodukt sowie ein Verfahren zum Herstellen eines solchen Messinglegierungsproduktes vorzuschlagen.

Gelöst wird die auf das Messinglegierungsprodukt gerichtete Aufgabe durch ein warm geformtes und anschließend zum Ausbilden von in der Matrix fein verteilten, Phosphor enthaltenden Nanoausscheidungen (P-Ausscheidungen) ausscheidungsgeglühtes Messingslegierungsprodukt für Gleit- oder Reibanwendungen in einer Ölumgebung mit folgender Zusammensetzung (Angaben in Gew.-%):
Cu 61,5 - 66 %,
Mn 1,7 - 2,3 %,
Ni 4,6 - 5,3 %,
Al 1,65 - 2,25 %,
Si 1,8 - 2,6 %,
Fe 0,17 - 0,5 %,
P 0,01 - 0,1 %,
Sn max. 0,35 %,
Co max. 0,2 %,
Cr max. 0,2 %,
Pb max. 0,1 %
Ti max. 0,2 %,
B max. 0,005 %,
Zn Rest sowie
unvermeidbare Verunreinigungen mit max. 0,05 % je Element, wobei die Summe der unvermeidbaren Verunreinigungen insgesamt 0,15 % nicht überschreitet.

Dieses Messinglegierungsprodukt vereint in sich die für derartige Anwendungen geforderten mechanischen Kennwerte nebst guter Zerspanbarkeit mit einer erhöhten Standfestigkeit gegenüber Belastungen, die herkömmlich zu einem Festfressen des Messinglegierungsproduktes mit seinem Gleit- oder Reibpartner führen würden. Mithin wird gegenüber vorbekannten Messinglegierungsprodukten eine höhere Fresslast benötigt, damit sich das Messinglegierungsprodukt mit seinem Gleit- oder Reibpartner festfrisst. Von Bedeutung hierbei ist, dass bereits eine Steigerung der Fresslast um wenige MPa signifikante Auswirkungen hat, da für ein Festfressen nicht nur die Fresslast, sondern auch die Wirkdauer der Fresslast auf das Messinglegierungsprodukt neben der Gleit- bzw. Reibgeschwindigkeit zwischen den beiden Partnern eine Rolle spielen. Eine Erhöhung der zum Festfressen erforderlichen Fresslast gegenüber Messinglegierungsprodukten, die nur einer herkömmlichen Fresslast standhalten, hat zugleich zur Folge, dass bei angenommener gleicher Gleit- bzw. Reibgeschwindigkeit bei Einwirken einer auf ein herkömmliches Messinglegierungsprodukt einwirkenden Fresslast eine längere Einwirkungsdauer erforderlich wäre, damit ein Festfressen eintritt. Da außergewöhnliche Belastungen, die ein Festfressen zur Folge haben können, mitunter nur kurzzeitig auftreten, wie beispielsweise das Schlagen einer Welle, bewirkt bereits eine geringe Erhöhung der Fresslast eine wirksame Verhinderung eines Festfressens. Dieses ist für viele Fälle bereits ausreichend. Ein Gleit- oder Reiblager eines erfindungsgemäßen Messinglegierungsproduktes erweist sich jedoch auch bei langsamen Gleit- bzw. Reibgeschwindigkeiten gegenüber dem Lagerpartner bei einem Schmierfilmabriss als deutlich standfester gegenüber einem Festfressen. Die beispielsweise durch Pb und/oder Sn durch den Legierungschemismus in das Messinglegierungsbauteil eingebaute Notlaufeigenschaft vermag ein Festfressen nicht zu vermeiden, wenn die in der Gleit- oder Reibfläche auftretenden Kräfte entsprechend hoch und/oder die Einwirkungsdauer entsprechend lang ist. Dieses wird als besonderer Vorteil des erfindungsgemäßen Messinglegierungsproduktes angesehen, da dann grundsätzlich zusätzliche Maßnahmen zum Bereitstellen der herkömmlich zu diesem Zweck durch den Legierungschemismus eingebauten Notlaufeigenschaften nicht mehr erforderlich sind. Die Legierung kann dennoch hinsichtlich ihres Chemismus so ausgelegt werden, dass auch auf diese Weise gewisse Notlaufeigenschaften an der Gleit- bzw. Reibfläche vorhanden sind.

Dass ein solches Messinglegierungsprodukt für Gleit- oder Reibanwendungen in einer Ölumgebung mit dieser Legierungszusammensetzung nach einem Warmformen, typischerweise einem Strangpressen, und einem anschließenden Ausscheidungsglühen eine verbesserte Standfestigkeit gegenüber Festfressen aufweisen würde, war nicht zu erwarten gewesen. Verantwortlich für die verbesserte Standfestigkeit gegenüber Festfressen wird bei diesem Messinglegierungsprodukt der Einsatz von Phosphor (P) und die Ausbildung von P-enthaltenden Nanoausscheidungen bei dem Vorgang des Ausscheidungsglühens gemacht. Wesentlich für die verbesserte Standfestigkeit gegenüber Festfressen sind die in der Matrix infolge des Ausscheidungsglühens in hoher Dichte homogen verteilten Phosphor-Nanoausscheidungen (P-Ausscheidungen). Bei diesen P-Ausscheidungen handelt es sich um sehr kleine Ausscheidungen mit einer Korngröße, die bezüglich ihrer Konrgröße zwei oder mehr Potenzen kleiner sind als die beim Guss der Legierung gebildeten Phosphide oder auch in der Matrix enthaltene Silizide. Über die Temperatur und die Haltezeit des Ausscheidungsglühens lässt sich die Größe und die Verteilungsdichte der Phosphor enthaltenden Nanoausscheidungen einstellen. Bei geringeren Temperaturen und einer längeren Haltezeit bilden sich P-Ausscheidungen geringerer Korngröße, während bei höheren Temperaturen eher etwas größere, jedoch immer noch im Nano-Größenbereich anzusiedelnde P-Ausscheidungen gebildet werden. Die Ausscheidungsdichte kann ebenfalls über die Zeitdauer des Ausscheidungsglühens vorgenommen werden. Ist die Haltezeit länger, ist die Verteilungsdichte der P-Ausscheidungen größer. Wesentlich bei diesen P-Ausscheidungen ist ihre homogene Verteilung innerhalb der Matrix. Begründet wird die besondere homogene Verteilung durch den Prozess des Ausscheidungsglühens mit seiner Haltezeit, die gegenüber der Zeitspanne der Entstehung von Ausscheidungen beim Abkühlen des Legierungsgusses signifikant länger ist.

Für den Aspekt der höheren Standfestigkeit des Messinglegierungsproduktes gegenüber einem Festfressen wird die größere Härte der P-Ausscheidungen gegenüber der Matrix und die homogene Verteilung dieser Ausscheidungen innerhalb der Matrix verantwortlich gemacht. Durch die homogene Verteilung der P-Ausscheidungen und ihre extrem kleine Korngröße reicht bereits ein geringer Volumen-Anteil der P-Ausscheidungen in der Matrix aus, um eine hohe Wirkung in Bezug auf eine Reduzierung der Fressneigung zu erreichen. Diese homogen in relativ dichter Anordnung in der Matrix fein verteilten P-Ausscheidungen bewirken an der Gleit- bzw. Reibfläche des Messinglegierungsproduktes, dass radiale Belastungen der Gleit- bzw. Reibfläche des Messinglegierungsproduktes auf dem Gleit- bzw. Reibpartner oder umgekehrt jedenfalls vornehmlich über die P-Ausscheidungen übertragen werden. Damit wirkt eine solche außergewöhnliche Belastung, die bei herkömmlichen Messinglegierungsprodukten zu einem Festfressen führen kann, nur in einem untergeordneten Maße, d.h.: Auch mit einer geringeren Kraft auf das die Phosphide umgebende Matrixmaterial. Dieses ist mithin einer geringeren Belastung ausgesetzt, weshalb im Vergleich zu vorbekannten Messinglegierungsprodukten dieser Art die Standfestigkeit gegenüber einem Festfressen deutlich verbessert ist. Bei dem erfindungsgemäßen Messinglegierungsprodukt macht man sich den Umstand zunutze, dass nicht die P-Ausscheidungen des Messinglegierungsproduktes an dem Gleit- oder Reibpartner festfressen, sondern das diese Ausscheidungen umgebende Matrixmaterial.

Diese in relativ hoher Dichte homogen im Messinglegierungsprodukt vorhandenen und an der Gleit- und Reibfläche oberflächlich freiliegenden P-Nanoausscheidungen bilden ihrerseits auch einen Verankerungsgrund für den Schmiermittelfilm und die Tribo-Schicht.

Besonders gute Ergebnisse in Bezug auf eine Verbesserung der Standfestigkeit gegenüber Festfressen lassen sich erzielen, wenn der P-Gehalt der Legierung 0,03 - 0,1 Gew.-%, insbesondere 0,06 - 0,1 Gew.-% beträgt. Der P-Gehalt ist auf 0,1 Gew.-% begrenzt. Bei höheren P-Gehalten, insbesondere bei deutlich höheren P-Gehalten bilden sich im Zusammenhang mit dem Ausscheidungsglühen größere P-Ausscheidungen aus. Zudem wird bei höheren P-Gehalten die Legierungsschmelze dünnflüssiger, was beim Legierungsguss nicht gewünscht wird.

Es wird als ausreichend angesehen, wenn der Volumen-Anteil der P-Ausscheidungen zwischen 0,08 und 0,2 Vol.-%, insbesondere zwischen 0,12 und 0,17 Vol.-% beträgt.

In dem Messinglegierungsprodukt enthaltene andere Hartphasenausscheidungen oder auch beim Guss entstandene Phosphide sind ebenfalls wie die P-Ausscheidungen für die Verschleißbeständigkeit des Messinglegierungsproduktes verantwortlich.

Die Legierungszusammensetzung ist so gewählt, dass das Messinglegierungsprodukt dominant α-Phase aufweist. Die β-Phasenanteile sind inselartig in der α-Phase angeordnet. Der Anteil an β-Phase in der Matrix beträgt maximal 20 Vol.-%. Bevorzugt ist jedoch eine Ausgestaltung, bei der der Anteil der β-Phase noch geringer ist, insbesondere maximal nur 15 Vol.-% beträgt.

Die Legierung des Messinglegierungsproduktes kann Sn enthalten. Bereits geringe Sn-Beimischungen wirken sich vorteilhaft auf die Ausbildung der sogenannten Tribo-Schicht auf der Gleit- bzw. Reibfläche des Messinglegierungsproduktes aus. 0,01 Gew.-% Sn können diesbezüglich bereits etwas bewirken. Vorzugsweise ist der Sn-Gehalt, wenn die das Messinglegierungsprodukt schützende Tribo-Schicht verbessert werden soll, höher. Dieser sollte jedoch 0,35 Gew.-% nicht überschreiten und liegt vorzugsweise in der Spanne zwischen 0,03 und 0,3 Gew.-% liegt. Eine Unterstützung der Ausbildung der Tribo-Schicht auf der Gleit- oder Reibfläche des Messinglegierungsproduktes wirkt sich ebenfalls positiv auf die Standfestigkeit gegenüber einem Festfressen aus. Somit kann auch auf diese Weise die diesbezügliche Standfestigkeit des Messinglegierungsproduktes gesteigert werden.

Cr und/oder Co können als P-Ausscheidungselemente ebenfalls Teil der Legierung sein, aus der das Messinglegierungsprodukt hergestellt ist. Ihr Anteil sollte 0,2 Gew.-% nicht überschreiten, da ansonsten andere, an das Messinglegierungsprodukt gestellte Anforderungen nicht mehr gewährleistet werden können. Beträgt der Anteil dieser Elemente mehr als 0,2 Gew.-% wirkt sich dieses auf die Ausprägung der unterschiedlichen Partikelarten aus. Dann kann nicht mehr gewährleistet werden, dass sich die gewünschten Partikel - P-Ausscheidungen, Phosphide, Silizide - ausbilden. Überdies wirkt sich dieses auch negativ auf die Festigkeit aus. Auch diesbezüglich können bereits geringe Anteile von 0,01 Gew.-% zur Unterstützung der beim Ausscheidungsglühen sich bildenden P-Ausscheidungen hilfreich sein.

Die Legierung kann Ti bis 0,2 Gew.-% und B bis 0,005 Gew.-% enthalten. Beide Elemente wirken kornfeinend.

Bei dem erfindungsgemäßen Messinglegierungsprodukt wirkt sich der P-Gehalt auch zum Gewährleisten einer guten Zerspanbarkeit aus. Grund hierfür sind die beim Guss entstehenden Phosphide, die ebenso wie die in der Matrix enthaltenen Silizide hinreichend groß sind, um einen Spanbruch zu begünstigen.

Um bestimmte mechanische Eigenschaften in dem Messinglegierungsprodukt einzustellen, kann dieses vor dem Schritt des Ausscheidungsglühens kalt geformt, beispielsweise gezogen bzw. gereckt werden. Einem solchen Schritt des Kaltziehens geht vorzugsweise ein Schritt des Zwischenglühens voran. Dieser wird bei Temperaturen durchgeführt, wie diese vorstehend für den Prozessschritt des Ausscheidungsglühens angegeben sind. Typischerweise ist die Haltezeit bei einem solchen Zwischenglühen jedoch geringer als bei dem Schritt des Ausscheidungsglühens. Das Ergebnis ist, dass dann bereits bei diesem Zwischenglühschritt erste P-Ausscheidungen in Nano-Größe entstehen. In dem dann nachgeschalteten Schritt des Ausscheidungsglühens werden weitere P-Ausscheidungen in Nano-Größe erzeugt. Durchaus kann ein solches Kaltumformen, wie beispielsweise ein Kaltziehen auch mehrschrittig durchgeführt werden, wobei zwischen jedem Schritt ein Zwischenglühschritt eingeschaltet ist.

### Ausführungsbeispiele

Aus der erfindungsgemäßen Legierung sind Buchsen als Messinglegierungsprodukte hergestellt worden. In einem ersten Schritt wurden die Legierungselemente erschmolzen und in einen Block gegossen. Dieser Block ist in einem nachfolgenden Schritt zur Ausbildung einer Hohlstange warmgeformt, und zwar stranggepresst worden. Der Außendurchmesser der stranggepressten Hohlstange als Vorprodukt für die eigentlichen Messinglegierungsprodukte - die Buchsen - betrug 40 mm mit einer Wandstärke von 3 mm. Nach dem Strangpressen sind die stranggepressten Produkte bei einer Temperatur von 285°C für 0,75 h zwischengeglüht worden. Nachfolgend sind die stranggepressten und zwischengeglühten Produkte gereckt (kalt umgeformt) worden. Nachfolgend sind diese Produkte dann ausscheidungsgeglüht worden, und zwar bei 295°C für 1,5 h. In einem nachfolgenden Schritt sind die Buchsen von der Hohlstange abgelängt und zur Ausbildung der Gleitfläche innenseitig spanend bearbeitet worden. Diese Buchsen als Messinglegierungsprodukte sind anschließend in Bezug auf ihre Beständigkeit gegenüber einem Festfressen untersucht worden.

In gleicher Weise sind Vergleichsbuchsen (Vergleichsmessinglegierungsprodukte) erstellt worden, jedoch unter Verwendung vorbekannter Messinglegierungen und ohne den Schritt des Ausscheidungsglühens durchzuführen.

Die chemische Zusammensetzung der Vergleichsbuchsen (V1 - V5) und der untersuchten erfindungsgemäßen Messinglegierungsprodukte (E1 - E6) sind der nachfolgenden Tabelle zu entnehmen:

| | **V1** | **V2** | **V3** | **V4** | **V5** | **E1** | **E2** | **E3** | **E4** | **E5** | **E6** |
|---|---|---|---|---|---|---|---|---|---|---|---|
| **Cu** | 58,3 | 58,5 | 60,3 | 61,5 | 58 | 62,7 | 65 | 63,7 | 64,2 | 63,5 | 62,3 |
| **Mn** | 2,2 | 1,9 | 0,75 | 1,75 | 0,47 | 1,85 | 2,05 | 2,2 | 2,15 | 1,9 | 1,95 |
| **Ni** | 0,7 | | 2,9 | 1,95 | | 5,1 | 4,95 | 5,15 | 4,8 | 4,9 | 4,85 |
| **Al** | 1,9 | 1,55 | 3,75 | 2,35 | | 2,15 | 1,95 | 1,75 | 2,05 | 1,7 | 2,05 |
| **Si** | 0,9 | 0,75 | 1,4 | 0,8 | | 2,3 | 2,55 | 2,0 | 2,35 | 1,95 | 2,15 |
| **Fe** | 0,6 | 0,45 | 0,9 | 0,95 | | 0,3 | 0,35 | 0,3 | 0,25 | 0,3 | 0,23 |
| **P** | | | 0,07 | 0,07 | 0,06 | 0,09 | 0,08 | 0,065 | 0,08 | 0,085 | 0,07 |
| **Sn** | 0,1 | 0,25 | | | | | | 0,2 | 0,25 | 0,1 | 0,09 |
| **Co** | | | | | | | | | | 0,12 | |
| **Cr** | | | | | | | | | | | 0,07 |
| **Pb** | 0,6 | | | | | | | | | | |
| **Ti** | | | | | | | | | | | 0,08 |
| **B** | | | | | | | | | | | 0,004 |
| **Zn** | Rest | Rest | Rest | Rest | Rest | Rest | Rest | Rest | Rest | Rest | Rest |

Bei der Legierung der Vergleichsbuchse V1 handelt es sich um die Legierung CW713R, einer Standardlegierung für Gleitanwendung in einer Ölumgebung. Die Vergleichsbuchse V2 ist aus der Legierung CuZn37Mn3Al2Si hergestellt. Diese ist der Legierung CW713R sehr ähnlich, gegenüber dieser jedoch Pb-frei. Bei der Legierung, aus der die Vergleichsbuchse V3 hergestellt worden ist, handelt es sich um die in EP 3 992 317 A1 als Legierung 1 beschriebene Legierung. Die Vergleichsbuchse V4 wurde aus der in EP 3 992 317 A1 als Legierung 4 beschriebene Legierung hergestellt. Die Legierung der Vergleichsbuchse V5 ist die in EP 3 992 320 als Legierung 2 beschriebene Legierung. Sämtliche Legierungen der Vergleichsbuchsen V1 bis V5 sind für Gleit- bzw. Reibanwendungen konzipiert.

Untersucht wurde die Beständigkeit der Buchsen gegenüber einem Festfressen im Zuge einer Gleitlagerpaarung der jeweiligen Buchse, aufgesetzt auf eine Stahlwelle als Lagerpartner, und durch Aufbringen einer Querkraft als Prüfkraft auf die Buchse. Die Gleitgeschwindigkeit der durchgeführten Untersuchungen betrug 0,1 m/s. Die auf die Buchse wirkende Prüfkraft wurde schrittweise erhöht. In jedem Schritt wurde die Belastung für 5 min. aufrechterhalten, bevor die Prüflast erhöht worden ist. Die ermittelte Fresslast ist diejenige Prüfkraft, die aufgebracht werden muss, damit sich die jeweils untersuchte Buchse an ihrem Lagerpartner festfrisst.

Das Ergebnis dieser Untersuchungen ist in der nachstehenden Tabelle, in der ebenfalls der Reibwert der untersuchten Buchsen angegeben ist, dargestellt:

| | **V1** | **V2** | **V3** | **V4** | **V5** | **E1** | **E2** | **E3** | **E4** | **E5** | **E6** | |
|---|---|---|---|---|---|---|---|---|---|---|---|---|
| RW | 0,11 | 0,1 | 0,09 | 0,08 | 0,08 | 0,075 | 0,077 | 0,078 | 0,076 | 0,078 | 0,08 | |
| FLa | 22 | 25 | 30 | 34 | 32 | 37 | 36,5 | 37,5 | 37 | 37 | 36,5 | |
| FLr | 1 | 1,14 | 1,36 | 1,55 | 1,45 | 1,68 | 1,66 | 1,70 | 1,68 | 1,68 | 1,66 | |

| | | | | | | | | | | | | |
|---|---|---|---|---|---|---|---|---|---|---|---|---|
| RW: Reibwert FLa: Fresslast, absolut [MPa] FLr: Fresslast, relativ | | | | | | | | | | | | |

Die erfindungsgemäßen Buchsen als Messinglegierungsprodukte weisen einen Reibwert auf, der für Gleitanwendungen als völlig ausreichend angesehen wird. Von den untersuchten Vergleichsbuchsen V1 - V5 unterscheiden sich die erfindungsgemäßen Buchsen (E1 - E6) signifikant durch ihre höhere Fresslast. Die Fresslast ist in der vorstehenden Tabelle absolut angegeben, und zwar in Höhe der aufgewendeten Prüfkraft, um ein Festfressen unter den genannten Bedingungen zu provozieren, sowie relativ, und zwar normiert zu der für derartige Anwendungen eingesetzten Standardlegierung, aus der die Vergleichsbuchse V1 hergestellt worden ist (CW713R).

Die durch den Einsatz der speziellen Legierungszusammensetzung und das Erzeugen der P-Ausscheidungen in Nanogröße verbesserte Standfestigkeit gegenüber einem Festfressen ist deutlich. Dieses Ergebnis war nicht vorherzusehen. Vielmehr war man überrascht, auf diese legierungstechnisch und verfahrenstechnisch einfache Maßnahme des Ausführens des Schrittes des Ausscheidungsglühens Eigenschaften an der Gleit- bzw. Reibfläche zu erhalten, die diejenigen der herkömmlich durch den Chemismus der Legierung bereitgestellter Notlaufeigenschaften signifikant überschreitet. Zudem braucht aufgrund der P-Ausscheidungen im Chemismus der Legierungszusammensetzung grundsätzlich keine Rücksicht darauf genommen werden, dass sich Notlaufeigenschaften ausbilden. Diese Funktion wird von den P-Ausscheidungen in sehr viel wirkungsvollerer Weise übernommen.

Die mechanischen Kennwerte der erfindungsgemäßen Buchsen (E1 - E6) betrugen im Strangpresszustand:
- 0,2 % Dehngrenze 275 - 305 MPa
- Zugfestigkeit Rₘ 585 - 625 MPa
- Bruchdehnung 9 - 14%.

Durch den Schritt des Reckens sind die 0,2%-Dehngrenze und die Zugfestigkeit Rₘ erhöht und die Bruchdehnung etwas reduziert worden. Das bei der genannten Temperatur durchgeführte Ausscheidungsglühen ändert diese mechanischen Kennwerte nicht nennenswert.

Die Fresslast konnte um gute 10 % gegenüber den ebenfalls P als Legierungselement enthaltenden Vergleichsbuchsen V3 - V5 und gegenüber den Pb-freien Vergleichsbuchsen V1 und V2 um etwa 50 % verbessert werden.

## Patentansprüche

1. Warmgeformtes und anschließend zum Ausbilden von in der Matrix fein verteilten, Phosphor enthaltenden Nanoausscheidungen (P-Ausscheidungen) ausscheidungsgeglühtes Messinglegierungsprodukt für Gleit- oder Reibanwendungen in einer Ölumgebung mit folgender Zusammensetzung (Angaben in Gew.-%):
Cu 61,5 - 66 %,
Mn 1,7 -2,3 %,
Ni 4,6 - 5,3 %,
Al 1,65 - 2,25 %,
Si 1,8 - 2,6 %,
Fe 0,17 - 0,5 %,
P 0,01 - 0,1 %,
Sn max. 0,35 %,
Co max. 0,2 %,
Cr max. 0,2 %,
Pb max. 0,1 %
Ti max. 0,2 %,
B max. 0,005 %,
Zn Rest sowie
unvermeidbare Verunreinigungen mit max. 0,05 % je Element, wobei die Summe der unvermeidbaren Verunreinigungen insgesamt 0,15 % nicht überschreitet.

2. Messinglegierungsprodukt nach Anspruch 1, **dadurch gekennzeichnet, dass** die P-Ausscheidungen einen Volumen-Anteil von 0,08 - 0,2 %, insbesondere 0,12 - 0,17 Vol.-% aufweisen.

3. Messinglegierungsprodukt nach einem der Ansprüche 1 oder 2, **dadurch gekennzeichnet, dass** in dem Messinglegierungsprodukt fein verteilte, Si enthaltende Hartphasenausscheidungen vorhanden sind.

4. Messinglegierungsprodukt nach einem der Ansprüche 1 bis 3, **dadurch gekennzeichnet, dass** der P-Gehalt 0,03 - 0,1 Gew.-%, insbesondere 0,06 - 0,1 Gew.-% beträgt.

5. Messinglegierungsprodukt nach einem der Ansprüche 1 bis 4, **dadurch gekennzeichnet, dass** an der Gleit- bzw. Reibfläche oberflächlich P-Nanoausscheidungen freiliegen.

6. Messinglegierungsprodukt nach einem der Ansprüche 1 bis 5, **dadurch gekennzeichnet, dass** die Legierung 0,01 - 0,35 Gew.-% Sn, insbesondere 0,03 - 0,3 Gew.-% Sn enthält.

7. Messinglegierungsprodukt nach einem der Ansprüche 1 bis 6, **dadurch gekennzeichnet, dass** die Matrix des Messinglegierungsproduktes α-Phasen dominant ist und maximal nur 20 Vol.-%, inbesondere maximal nur 15 Vol.-% β-Phase enthält.

8. Messinglegierungsprodukt nach einem der Ansprüche 1 bis 7, **dadurch gekennzeichnet, dass** das Messinglegierungsprodukt eine Lagerbuchse ist.

9. Verfahren zum Herstellen eines Messinglegierungsproduktes nach einem der Ansprüche 1 bis 8, **gekennzeichnet durch** folgende Prozessschritte:
- Bereitstellen eines für ein Warmformen geeigneten Messinglegierungsvorproduktes auf schmelzmetallurgischer Route,
- Warmformen des Messinglegierungsvorproduktes zum Erstellen eines warmgeformten Produktes und
- nachfolgend Ausscheidungsglühen des warmgeformten Produktes bei Temperaturen zwischen 200°C und 350°C für 0,5 - 2,5 h.

10. Verfahren nach Anspruch 9, **dadurch gekennzeichnet, dass** der Schritt des Ausscheidungsglühens in einem Temperaturfenster zwischen 270°C und 330°C für 1 - 2 h durchgeführt wird.

11. Verfahren nach Anspruch 9 oder 10, **dadurch gekennzeichnet, dass** vor dem Schritt des Ausscheidungsglühens das warmgeformte Produkt nach Durchführen eines Zwischenglühschrittes kalt gezogen wird.

12. Verfahren nach Anspruch 11, **dadurch gekennzeichnet, dass** das Zwischenglühen in einem Temperaturfenster zwischen 200°C und 350°C für 0,5 - 2,5 h, insbesondere in einem Temperaturfenster zwischen 270°C und 330°C für 0,75 - 1,75 h durchgeführt wird.

13. Verfahren nach einem der Ansprüche 9 bis 12, **dadurch gekennzeichnet, dass** mit dem Schritt des Bereitstellens eines für ein Warmformen geeigneten Messinglegierungsvorproduktes ein solches bereitgestellt wird, welches für ein Strangpressen geeignet ist, und dass der Warmformvorgang als Strangpressen ausgeführt wird.
